# EUROPÄISCHE PATENTSCHRIFT

(11) **EP 1 354 144 B1**
(45) Veröffentlichungstag und Bekanntmachung des Hinweises auf die Patenterteilung: **09.11.2005**
(21) Anmeldenummer: 02710215.1
(22) Anmeldetag: 24.01.2002
(51) Int. Cl.: F16C 17/04, F16C 17/06, F16C 33/20, F01D 25/16

(54) **HYDRODYNAMISCHES AXIALGLEITLAGER FÜR EINEN GENERATOR**
HYDRODYNAMIC AXIAL SLIDE BEARING FOR A GENERATOR
PALIER A GLISSEMENT AXIAL HYDRODYNAMIQUE DESTINE A UN GENERATEUR

(30) Priorität: 24.01.2001 EP 01810063
(43) Veröffentlichungstag der Anmeldung: 22.10.2003
(73) Patentinhaber: Alstom Technology Ltd, 5400 Baden (CH)
(72) Erfinder: MAHIEUX, Celine, CH-5413 Birmenstorf (CH); FUERST, Axel, Günter, Albert, CH-5412 Gebenstorf (CH)
(86) Internationale Anmeldenummer: PCT/IB2002/000203
(87) Internationale Veröffentlichungsnummer: WO 2002/059490

(56) Entgegenhaltungen:
- GB-A- 2 095 170
- US-A- 3 873 168
- US-A- 4 603 071
- US-A- 5 234 752
- US-A- 5 796 349
- US-A- 5 821 204
- PATENT ABSTRACTS OF JAPAN vol. 2000, no. 01, 31. Januar 2000 (2000-01-31) & JP 11 270550 A (HITACHI LTD), 5. Oktober 1999 (1999-10-05)
- PATENT ABSTRACTS OF JAPAN vol. 1998, no. 09, 31. Juli 1998 (1998-07-31) & JP 10 089346 A (HITACHI LTD), 7. April 1998 (1998-04-07)

## Beschreibung

### Technisches Gebiet

Die Erfindung bezieht sich auf ein hydrodynamisches Axialgleitlager für einen Generator zur Stromerzeugung, gemäss dem Oberbegriff des Anspruchs 1. Ein solches hydrodynamisches Axialgleitlager ist aus der US 5 796 349A bekannt.

### Stand der Technik

Bei grossen Generatoren zur Stromerzeugung kommt den Lagern eine Schlüsselstellung zu. Versagt das Lager kommt die auf diesem Generator basierende Stromproduktion zum Stillstand. Neben den Radiallagern für die Welle haben die Axiallager vor allem bei vertikal betriebenen Generatoren, wie sie beispielsweise bei der Stromerzeugung mittels Wasserturbinen eingesetzt werden, einer grossen Belastung standzuhalten. Eine sehr elegante aber teuere Möglichkeit, ist die Ausgestaltung des Axiallagers als Magnetlager. Eine andere Möglichkeit besteht in der Ausgestaltung als Wälzlager. Diese Lager sind aber aufgrund ihrer grossen Abmessung und der damit verbundenen relativ grossen Formungenauigkeit der Einzelteile nicht für Durchmesser von mehreren Metern geeignet.

Die übliche Bauform sind hydrodynamische Axialgleitlager, bei denen ein an der Welle des Rotors befestigter Laufring mitrotiert. Dieser Laufring stützt den Rotor axial gegen ein Lagergehäuse ab. Der Laufring gleitet auf einem Schmiermittelfilm über im Lagergehäuse angeordnete Lagersegmente.

Gemäss der EP 1058368A2, Fig. 3, werden zur Wellenlagerung hydrodynamische Gleitlager eingesetzt, welche.als axiale Traglager bzw. als kombinierte Trag- und Führungslager ausgebildet sind. Die Lagerung wird mittels eines tragfähigen hydrodynamischen Schmiermittelfilms gewährleistet, der sich durch ein Keilprofil im Schmierspalt aufbaut. Bei solchen grossen Generatoren zur Stromerzeugung kommen Laufringe mit Durchmessern von etwa 2m bis 6m zum Einsatz. Bei den verwendeten hohen Umdrehungszahlen treten entsprechend hohe Temperaturen im hydrodynamischen Axialgleitlager auf, denen der Laufring standhalten muss.

Ausserdem kann der hydrodynamische Druck im Schmierspalt so gross werden, dass sogar angrenzende metallische Oberflächen bleibend verformt werden. Die Laufringe für solche hydrodynamischen Axialgleitlager müssen somit eine hohe Steifigkeit und Festigkeit und auch eine hohe Warmfestigkeit aufweisen. Sie werden daher bisher aus Stahl gefertigt. Damit bei einem partiellen Ausfall der Schmierung des hydrodynamischen Axialgleitlagers nicht sofort eine Havarie des Lagers auftritt, sind die Lagersegmente mit einem Gleitmaterial, wie zum Beispiel Weissmetall oder Polytetrafluorethylen (PTFE), beschichtet. Aufgrund des grossen Temperaturausdehnungskoeffizienten von Stahl kommt es aber unter den hohen Temperaturen im Lager zu einer Verformung des Laufrings (Wölbung der Oberfläche oder Wellenbildung), die ein um so grösseres Problem darstellt, je grösser der Durchmesser des Laufrings ist. Bei diesen Laufringen können aufgrund der nicht vorhersehbaren Verformungen grosse Verschleisserscheinungen oder sogar Schäden im hydrodynamischen Axiallager auftreten. Der Wartungsaufwand und die Stillstandszeiten für das Auswechseln einzelner Lagerbestandteile sind entsprechend gross und reduzieren die Wirtschaftlichkeit des Generators. Zudem stellt das Gewicht der Stahl-Laufringe bei grossen Generatoren, wie sie für die Stromproduktion verwendet werden, bereits beim Transport und bei der Montage vor Ort oft ebenfalls ein Problem dar.

### Darstellung der Erfindung

Aufgabe der Erfindung ist es daher, ein hydrodynamisches Axialgleitlager der eingangs genannten Art zur Verfügung zu stellen, dessen Lebensdauer und Belastbarkeit höher ist und dessen Montage einfacher ist, so dass der Generator in Montage und Betrieb wirtschaftlicher ist.

Die Aufgabe wird erfindungsgemäß durch ein hydrodynamisches Axialgleitlager gemäß Anspruch 1 gelöst. Ein solches Axialgleitlager besitzt deshalb eine höhere Lebensdauer, weil der faserverstärkte Kunststoff einen geringeren Ausdehnungskoeffizienten aufweist als Stahl und sich der Laufring daher kaum verformt. Somit können Beschädigungen durch grosse Verformungen der Stahl-Laufringe verhindert werden. Da Laufringe aus faserverstärktem Kunststoff zudem ein viel geringeres Gewicht haben als solche aus Stahl, sind sowohl der Transport als auch die Montage viel einfacher und kostengünstiger durchzuführen. Ausserdem sind grössere Ausführungen solcher Lager realisierbar, als das mit Stahllaufringen möglich ist.

Sehr günstig ist es, einen faserverstärkten Kunststoff mit kontinuierlichen Fasern zu verwenden, da auf diese Weise sowohl günstigere Steifigkeitswerte als auch ein geringerer Ausdehnungskoeffizient erreicht werden.

Wird der Laufring als Laminat aus wenigstens vier Schichten faserverstärkten Kunststoffs mit jeweils unidirektional ausgerichteten Fasern gefertigt und liegen die Winkel der Faserausrichtung der Schichten zwischen 0° und 90°, kann die thermische Ausdehnung des Laufrings weiter verringert werden.

Wird als Kunststoffmatrix eine Epoxydmatrix gewählt, so ist eine vorzügliche Warmfestigkeit gewährleistet.

Sehr vorteilhaft ist es, wenn als Verstärkungsfasern Kohlefasern eingesetzt werden, da diese einen negativen thermischen Ausdehnungskoeffizienten besitzen. Werden Kohlefasern in eine Epoxydharz-Matrix laminiert eingebettet, kann ein Material nahezu ohne thermische Ausdehnung und mit einer erhöhten spezifischen Steifigkeit erreicht werden.

Je nach Anforderungen des jeweiligen hydrodynamischen Axialgleitlagers ist ein Faseranteil von 50 Vol% bis 70 Vol% im Laufring sehr vorteilhaft, da die Festigkeit und Steifigkeit des Laufrings mit zunehmendem Faseranteil steigt.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: Schnittbild eines hydrodynamischen Axialgleitlagers mit einem erfindungsgemässen Verbundwerkstofflaufring;
- Fig. 2: Schnitt durch einen erfindungsgemässen Laufring;
- Fig. 3: exemplarische Explosionsdarstellung von acht aufeinanderfolgenden Schichten des Laufrings.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

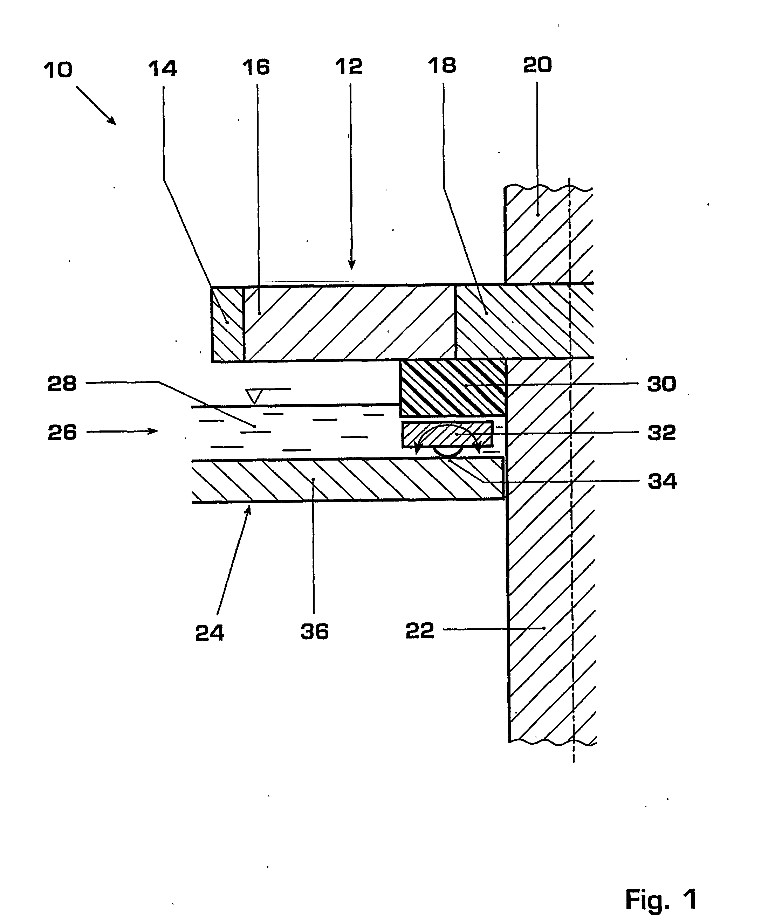

Figur 1 zeigt schematisch einen Ausschnitt eines vertikal ausgerichteten, mittels einer nicht dargestellten Wasserturbine betriebenen Generators 10. Dargestellt ist ein Rotor 12 des Generators 10 mit Generatorpolen 14 am Rande des Rotorkranzes 16. Der Rotorkranz 16 ist über eine Rotornabe 18 mit der Rotorwelle verbunden. Die Rotorwelle kann als ein Stück oder, wie dargestellt, aus einem oberen Welleteil 20 und einem unteren Wellenteil 22 ausgeführt sein. Die Rotornabe 18 verbindet zugleich den oberen Wellenteil 20 des Generators 10 mit dem unteren Wellenteil 22, welcher zur nicht dargestellten Turbine führt. Der untere Wellenteil 22 der Turbine ist axial in einem Lagergehäuse 24 gelagert. Zwischen dem Lagergehäuse 24 und dem Rotor 12 ist ein hydrodynamisches Axialgleitlager 26 angeordnet. Das hydrodynamische Axialgleitlager 26 besteht aus einem rotierenden Laufring 30 aus einer faserverstärkten Kunststoffmatrix und aus feststehenden Lagersegmenten 32. Die Lagersegmente 32 sind so ausgeführt das sich im Betrieb ein keilförmiger Schmierfilm zwischen dem Laufring 30 und den Lagersegmenten 32 ausbilden kann. Diese Lagersegmente 32 sind in der Regel einzelne Körper, die sich um einen auf der Gehäusewand 36 des Lagergehäuses 24 abgestützten Kipppunkt 34 frei drehen können, was durch einen entsprechenden Doppelpfeil in Fig. 1 dargestellt ist. Auf diese Weise kann sich der Schmierspalt optimal einstellen. Das hydrodynamische Axialgleitlager 26 wird mit Hilfe eines Schmiermittels 28, meistens Maschinenöl, betrieben. Das Ölniveau übersteigt die Höhe des Schmierspaltes zwischen dem Laufring 30 und dem Lagersegment 32. Auch eine individuelle Ölversorgung der einzelnen Lagersegmente 32 ist denkbar.

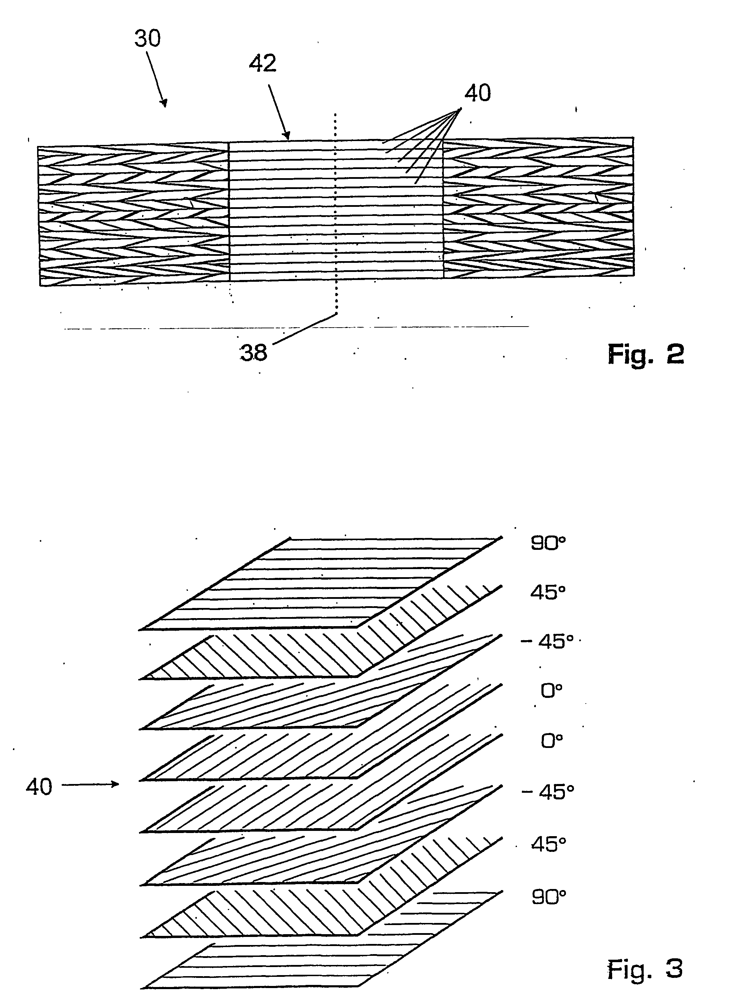

Fig. 2 zeigt eine bevorzugte Ausführungsform des Laufrings 30 aus faserverstärktem Kunststoff im Schnitt entlang der Rotationsachse 38. Der Laufring 30 ist als Laminat aus mehreren Schichten 40 faserverstärkten Kunststoffs hergestellt, wobei die Fasern kontinuierliche Kohlefasern mit unidirektionaler Ausrichtung in jeder Schicht 40 sind. Die Fasern sind in eine Epoxydmatrix eingebettet. Der Winkel der Ausrichtung der Kohlefasern ändert sich von Schicht 40 zu Schicht 40. Um die nötige Dicke des Laufrings 30 zu erhalten wird dabei vorteilhaft eine Winkelfolge von [[0°/ -45°/ 45°/90°]_{symmetrisch}]ₙ mehrmals wiederholt (Index "n").
In Fig. 3 ist die Aufeinanderfolge von 8 Schichten 40 mit der angegebenen Winkelfolge in einer Explosionsdarstellung gezeigt. Mit einer solchen symmetrischen Schichtung kann einer Verformung des Laufrings entgegengewirkt werden. Natürlich können dabei die dargestellten Ausrichtungswinkel der Fasern variieren.

Der Laufring kann einfach und günstig z.B. durch Autoklavier-Verfahren von vorgefertigten Prepregs hergestellt werden. Eine für die Durchführung der Welle 20/22 durch den Laufring 30 nötige Öffnung 42 in der Mitte des Laufrings kann leicht durch Bohren oder Drehen erzeugt werden. Ebenso können allenfalls nötige Strukturen in der Oberfläche der Lagerscheibe 30 für eine bessere Schmiermittelverteilung leicht durch Fräsen in die Oberfläche eingearbeitet werden.

Je nach den Anforderungen des hydrodynamischen Axialgleitlagers können Fasern wie Kohlefasern, Glasfasern oder auch Polyamidfasern verwendet werden. Statt einer Epoxydmatrix können auch andere thermisch resistente Kunststoffe gewählt werden, wie beispielsweise Rhodeftal Polyaminoimid (von Vantico). Wo dies nötig erscheint kann zusätzlich noch eine Beschichtung auf den Laufring aufgebracht werden, die wegen der besseren Haftungseigenschaften vorzugsweise ebenfalls eine Kunststoffbeschichtung sein sollte.

Natürlich ist es möglich, nicht nur den Laufring, sondern auch die Welle aus dem faserverstärkten Kunststoff zu fertigen. Dadurch kann weiter Gewicht eingespart werden.

Ein weiterer Vorteil für die gesamte Konstruktion des Generators ergibt sich dann, wenn das hydrodynamische Axialgleitlager mit einem radialen Führungslager kombiniert ist. Dabei wird der Laufring sowohl für das Axialgleitlager als auch das Führungslager verwendet. In diesem Fall verbessert die geringere Verformung des Laufrings das Betriebsverhalten der radialen Lagerung.

### Bezugszeichenliste

- 10: Generator
- 12: Rotor
- 14: Generatorpol
- 16: Rotorkranz
- 18: Rotornabe
- 20: oberer Wellenteil
- 22: unterer Wellenteil
- 24: Lagergehäuse
- 26: hydrodynamisches Axialgleitlager
- 28: Schmiermittel
- 30: Laufring
- 32: Lagersegment
- 34: Kipppunkt
- 36: Gehäusewand
- 38: Rotationsachse
- 40: Schicht
- 42: Öffnung

## Patentansprüche

1. Hydrodynamisches Axialgleitlager für einen, vorzugsweise mittels einer Wasserturbine betreibbaren Generator (10), mit einem Rotor (12), einem mit der Welle des Rotors (12) mitrotierenden Laufring (30) und zumindest einem mit der Welle (20) des Rotors (12) nicht mitrotierenden, an einem Lagergehäuse (24) abgestützten Lagersegment (32), wobei der Laufring (30) im wesentlichen aus einer Kunststoffmatrix mit darin eingebetteten Verstärkungsfasern besteht, **dadurch gekennzeichnet, dass** der Laufring (30) als Laminat gefertigt ist und aus wenigstens vier Schichten (40) faserverstärkten Kunststoffes besteht, wobei die Fasern in jeder Schicht (40) unidirektional ausgerichtet sind und der Winkel der Faserausrichtung der Schichten zwischen 0° und 90° liegt.

2. Hydrodynamisches Axialgleitlager nach Anspruch 1, **dadurch gekennzeichnet, dass** kontinuierliche Fasern in der Kunststoffmatrix eingebettet sind.

3. Hydrodynamisches Axialgleitlager nach Anspruch 2, **dadurch gekennzeichnet, dass** die Kunststoffmatrix eine Epoxydmatrix ist.

4. Hydrodynamisches Axialgleitlager nach einem der Ansprüche 1 bis 3, **dadurch gekennzeichnet, dass** die Verstärkungsfasern Kohlefasern sind.

5. Hydrodynamisches Axialgleitlager nach einem der Ansprüche 1 bis 4, **dadurch gekennzeichnet, dass** der Faseranteil in der Matrix zwischen 50 Vol% und 70 Vol% beträgt.

6. Hydrodynamisches Axialgleitlager nach einem der Ansprüche 1 bis 5, **dadurch gekennzeichnet, dass** die Schichten (40) des Laminats eine Winkelfolge [[0°/ - 45°/ 45°/ 90°]_{symmetrisch}]ₙ aufweisen.

## Claims

1. Hydrodynamic axial slide bearing for a generator (10) which can preferably be operated by means of a water turbine, having a rotor (12), a raceway (30) rotating with the shaft of the rotor (12), and at least one bearing segment (32) which does not rotate with the shaft (20) of the rotor (12) and is supported on a bearing housing (24), the raceway (30) essentially comprising a plastic matrix with reinforcing fibres embedded therein, **characterized in that** the raceway (30) is produced as a laminate and consists of at least four layers (40) of fibre-reinforced plastic, the fibres in each layer (40) being oriented unidirectionally, and the angle of the fibre orientation of the layers being between 0° and 90°.

2. Hydrodynamic axial slide bearing according to Claim 1, **characterized in that** continuous fibres are embedded in the plastic matrix.

3. Hydrodynamic axial slide bearing according to Claim 2, **characterized in that** the plastic matrix is an epoxy matrix.

4. Hydrodynamic axial slide bearing according to one of Claims 1 to 3, **characterized in that** the reinforcing fibres are carbon fibres.

5. Hydrodynamic axial slide bearing according to one of Claims 1 to 4, **characterized in that** the fibre proportion in the matrix is between 50% by volume and 70% by volume.

6. Hydrodynamic axial slide bearing according to one of Claims 1 to 5, **characterized in that** the layers (40) of the laminate have an angle sequence [[0°/-45°/45°/90°]_{symmetric}]ₙ.

## Revendications

1. Palier lisse axial hydrodynamique pour un générateur (10), actionnable de préférence au moyen d'une turbine hydraulique, avec un rotor (12), une bague mobile (30) tournant avec l'arbre du rotor (12) et au moins un segment de palier (32) monté sur un corps de palier (24) et ne tournant pas avec l'arbre (20) du rotor (12), dans lequel la bague mobile (30) se compose essentiellement d'une matrice en matière plastique avec des fibres de renforcement noyées dans celle-ci, **caractérisé en ce que** la bague mobile (30) est fabriquée sous la forme d'un stratifié et se compose d'au moins quatre couches (40) de matière plastique renforcée par des fibres, dans lequel les fibres ont une orientation unidirectionnelle dans chaque couche (40) et l'angle de l'orientation des fibres des couches se situe entre 0° et 90°.

2. Palier lisse axial hydrodynamique selon la revendication 1, **caractérisé en ce que** des fibres continues sont noyées dans la matrice de matière plastique.

3. Palier lisse axial hydrodynamique selon la revendication 2, **caractérisé en ce que** la matrice de matière plastique est une matrice en époxyde.

4. Palier lisse axial hydrodynamique selon l'une quelconque des revendications 1 à 3, **caractérisé en ce que** les fibres de renforcement sont des fibres de carbone.

5. Palier lisse axial hydrodynamique selon l'une quelconque des revendications 1 à 4, **caractérisé en ce que** la proportion de fibres dans la matrice est comprise entre 50% en volume et 70% en volume.

6. Palier lisse axial hydrodynamique selon l'une quelconque des revendications 1 à 5, **caractérisé en ce que** les couches (40) du stratifié présentent une séquence d'angles de [[0°/-45°/45°/90°]_{symétrique}]ₙ.
